# EUROPÄISCHE PATENTANMELDUNG

(11) **EP 2 660 074 A1**
(43) Veröffentlichungstag der Anmeldung: **06.11.2013**
(21) Anmeldenummer: 13160631.1
(22) Anmeldetag: 22.03.2013
(51) Int. Cl.: B44B 5/02, B29C 35/02, B29C 59/02, B44C 1/24, B01L 3/00

(54) **Prägeverfahren und ein mittels des Prägeverfahrens hergestelltes Werkstück**

(30) Priorität: 02.05.2012 DE 102012207231
(71) Anmelder: ROBERT BOSCH GMBH, 70442 Stuttgart (DE)
(72) Erfinder: Rupp, Jochen, 70178 Stuttgart (DE); Kehrbusch, Jenny, 75395 Ostelsheim (DE)

(57) **Zusammenfassung**

Die Erfindung betrifft ein Prägeverfahren zum Prägen eines Werkstücks (1), insbesondere eines mikrofluidischen Chips, mit den Schritten: Bereitstellen eines Werkstücks (1), wobei zumindest ein zu prägender Bereich (7) des Werkstücks (1), ein zu dem zu prägenden Bereich (7) angrenzender Bereich und/oder die Prägestruktur (10) des Prägestempels (2) aus einem eine Energie absorbierenden Material sind, und wobei das Werkstück (1) und/oder der Prägestempel zumindest einen Bereich (8) aufweist, welcher aus einem für die Energie durchlässigen Material ist; Aufbringen der Energie auf den zu prägenden Bereich (7) des Werkstücks (1) aus dem absorbierenden Material, auf den an den zu prägenden Bereich (7) angrenzenden Bereich aus dem absorbierenden Material und/oder auf die erste Prägestruktur (10) des Prägestempels (2) aus dem absorbierenden Material; Zusammenpressen des Werkstücks mit seinem zu prägenden Bereich und des Prägestempels mit seiner Prägestruktur, und Einprägen einer ersten Prägestruktur (10) in den zu prägenden Bereich (7) des Werkstücks.

## Beschreibung

Die Erfindung betrifft ein Prägeverfahren und ein mittels des Prägeverfahrens hergestelltes Werkstück. Insbesondere betrifft die Erfindung ein Prägeverfahren zum lokalen Mikroprägen von Oberflächen und ein Werkstück mit einer derartig mikrogeprägten Oberfläche.

### Stand der Technik

Prägeverfahren zum Umformen einer Oberfläche sind allgemein bekannt wie z.B. Heißprägen, Stempeln, Rollen. In der Regel wird ein Prägestempel mit einem Prägemuster auf eine Oberfläche gepresst. Der Pressvorgang kann mechanisch und thermisch durch Erwärmen unterstützt werden. Das Prägemuster dringt dann in die Oberfläche ein und wird auf diese Weise dort dauerhaft ausgebildet.

Des Weiteren ist aus der US 6,753,131 B1 eine Kontakt-Fotolithographie-Maskierung bekannt, welche Vorsprünge und Vertiefungen aufweist. Die Vorsprünge werden mit einer Oberfläche mit Fotolack in Kontakt gebracht und die Oberfläche wird einer elektromagnetischen Strahlung durch die Maskierung ausgesetzt

### Offenbarung der Erfindung

Die Erfindung schafft ein Prägeverfahren und ein Werkstück mit einer geprägten Oberfläche mit den Merkmalen der unabhängigen Ansprüche.

Die Erfindung betrifft insbesondere ein Prägeverfahren zum Prägen eines Werkstücks, insbesondere eines mikrofluidischen Chips, mit den Schritten: Bereitstellen eines Werkstücks, wobei zumindest ein zu prägender Bereich des Werkstücks, ein zu dem zu prägenden Bereich angrenzender Bereich und/oder die Prägestruktur des Prägestempels aus einem eine Energie absorbierenden Material sind, und wobei das Werkstück und/oder der Prägestempel zumindest einen Bereich aufweist, welcher aus einem für die Energie durchlässigen Material ist; Aufbringen der Energie auf den zu prägenden Bereich des Werkstücks aus dem absorbierenden Material, auf den an den zu prägenden Bereich angrenzenden Bereich aus dem absorbierenden Material und/oder auf die erste Prägestruktur des Prägestempels aus dem absorbierenden Material; Zusammenpressen des Werkstücks mit seinem zu prägenden Bereich und des Prägestempels mit seiner Prägestruktur, und Einprägen einer ersten Prägestruktur in den zu prägenden Bereich des Werkstücks.

Bevorzugte Weiterbildungen sind Gegenstand der Unteransprüche.

### Vorteile der Erfindung

Die vorliegende Erfindung schafft ein Prägeverfahren und ein mittels des Prägeverfahrens geprägtes Werkstück, welches die Ausbildung einer Prägung mit einer mikroskopischen Auflösung erlaubt. Des Weiteren wird durch das Aufbringen von Energie der Energiequelle nur auf den ausgewählten zu prägenden Bereich des Werkstücks oder nur auf die Prägestruktur des Prägestempels eine thermische Belastung der daran angrenzenden Bereiche verhindert, wodurch ein so geprägtes Werkstück insbesondere für Lab-on-a-Chip-Systeme geeignet ist, die beispielsweise in einem früheren Fertigungsschritt bereits bio-funktionalisiert wurden oder generell temperaturempfindliche Substanzen vorlagern oder bezüglich thermischem Stress empfindlich sind. Der Fachausdruck Lab-on-a-Chip-System bezeichnet ein mikrofluidisches System, in welchen ein oder mehrere Funktionalitäten eines makroskopischen Labors realisiert sind und welches derzeit üblicherweise die Größe einer Chip-Karte aufweist. Des Weiteren lassen sich mit Ausführungsformen der Erfindung sehr kleine Strukturen einprägen bis hin zu Nanostrukturen.

Die der vorliegenden Erfindung zugrunde liegende Idee besteht darin, dass ein Werkstück z.B. nur in dem zu prägenden Bereich Energie einer Energiequelle aufnimmt oder eine Prägestruktur eines zugeordneten Prägestempels zum Einprägen der Prägestruktur in das Werkstück. Dadurch kann erreicht werden, dass angrenzende Bereiche des Werkstücks oder des Prägestempels beispielsweise nicht thermisch belastet werden. Des Weiteren kann der Bereich des Werkstücks, der nicht mittels der Prägestruktur des Prägestempels geprägt werden soll, dem entsprechend nicht mit Energie der Energiequelle beaufschlagt oder bestrahlt werden, so dass ein Prägestempel mit verschiedenen Prägestrukturen für unterschiedlich zu prägende Werkstücke ausgebildet und eingesetzt werden kann.

In einer Ausführungsform des Prägeverfahrens weist der Prägestempel wenigstens eine zweite Prägestruktur auf. Die Energie der Energiequelle wird dabei auf einen ersten und/oder zweiten zu prägenden Bereich des Werkstücks aus dem absorbierenden Material aufgebracht und von diesem absorbiert. In einer weiteren Ausführungsform kann die Energie der Energiequelle auf die zu prägende erste und/oder zweite Prägestruktur des Prägestempels aufgebracht werden, wenn diese das energieabsorbierende Material aufweist. In beiden Ausführungsformen werden durch gezielte lokale Absorption der Energie nur die gewünschten Prägestrukturen in das Werkstück geprägt.

In einer weiteren Ausführungsform des Prägeverfahrens ist die Energiequelle eine Strahlungsquelle und insbesondere ein Laser, eine Elektronstrahlquelle oder eine Lichtquelle. Die Energie der Strahlung kann hierbei durch das entsprechende die Strahlung absorbierende Material des Werkstücks und/oder des Prägestempels absorbiert und dieses dadurch erwärmt werden, so dass die Prägung durch thermische Umformung in das Werkstück eingeformt oder eingeprägt werden kann.

In einer Ausführungsform des Prägeverfahrens kann das Werkstück mit einer Maskierungseinrichtung versehen sein zum Bestrahlen des Werkstücks mittels einer Strahlungsquelle als Energiequelle. Die Maskierungseinrichtung maskiert dabei den jeweiligen Bereich des Werkstücks oder des Prägestempels, der nicht mittels der Energiequelle bestrahlt oder mit Energie beaufschlagt werden sollen. Dies hat den Vorteil, dass das Werkstück bzw. der Prägestempel in diesem Bereich nicht unbedingt aus einem für die Energie der Energiequelle durchlässigen oder transparenten Material bestehen müssen, sondern auch beispielsweise aus einem die Energie der Energiequelle absorbierenden Material hergestellt sein können.

Das die Energie der Energiequelle absorbierende Material und das für die Energie der Energiequelle durchlässige Material des Werkstücks ist in einer Ausführungsform des Prägeverfahrens beispielsweise ein thermisch verformbares Material wie beispielsweise ein Thermoplast oder ein thermoplastisches Elastomer oder ein Polycarbonat oder Cyclo-Olefin-Copolymer (COC) oder Cyclo-olefin Polymer (COP). Das thermisch verformbare Material behält die eingeprägte Struktur im Anschluss an das Prägeverfahren bei. Die Erfindung ist jedoch auf die genannten Materialien nicht beschränkt. Es kann jedes andere thermisch verformbare Material eingesetzt werden, das die Energie der Energiequelle absorbiert oder für sie durchlässig aber in Kontakt mit absorbierendem Material ist oder für sie durchlässig ist in Kombination mit einem absorbierenden Prägestempel und bei einem zu prägenden Werkstück verwendbar ist.

Der Prägestempel ist des Weiteren in einer Ausführungsform des Prägeverfahrens zumindest teilweise oder vollständig aus Silikon, Metall, Glas, einer Siliziumverbindung und/oder Silizium. Ein Prägestempel aus Metall oder Silizium ist besonders langlebig und eignet sich insbesondere, wenn eine Absorptionsschicht des zu prägenden Bereichs des Werkstücks mit der Energie der Energiequelle beaufschlagt und dadurch erwärmt wird.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Ansicht eines Werkstücks, welches mit einer Prägung durch einen Prägestempel gemäß einer Ausführungsform der Erfindung versehen wird;
- Fig. 2: eine schematische Ansicht des Werkstücks gemäß Fig.1, wobei in einer Absorptionsschicht des Werkstücks eine Prägung durch Prägestempel ausgebildet ist;
- Fig. 3: das fertig geprägte Werkstück gemäß der Fig. 1 und 2;
- Fig. 4: eine schematische Ansicht eines Werkstücks, welches mit einer Prägung durch einen Prägestempel gemäß einer weiteren Ausführungsform der Erfindung versehen wird;
- Fig. 5: ein Flussdiagramm einer Ausführungsform des erfindungsgemäßen Prägeverfahrens; und
- Fig. 6: ein Flussdiagramm einer weiteren Ausführungsform des erfindungsgemäßen Prägeverfahrens.

### Ausführungsformen der Erfindung

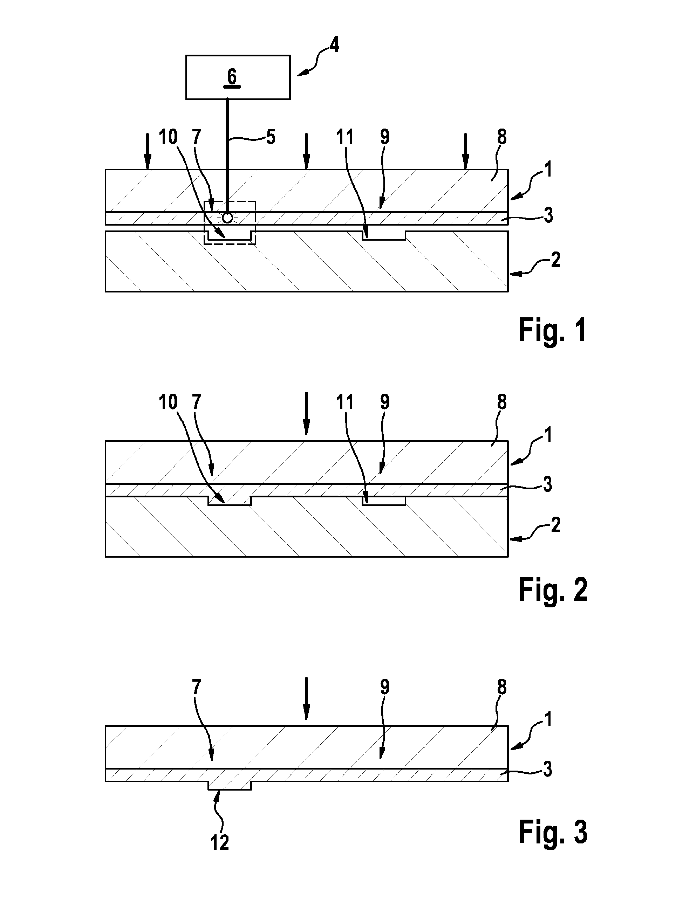

In Fig. 1 ist eine schematische Ansicht eines Werkstücks 1 gezeigt, welches mit einer Prägung durch einen Prägestempel 2 versehen wird, gemäß einem Ausführungsbeispiel der Erfindung.

Hierbei wird ein bezüglich des Energieträgers transparentes Werkstück 1 bereitgestellt, welches an einer Seite oder Oberfläche mit einer zusätzlichen Schicht 3 aus einem Absorptionsmaterial versehen ist zur Absorbierung von Energie einer Energiequelle 4, wie beispielsweise von Laserstrahlen 5 eines Lasers 6. Die Absorptionsschicht 3 soll hierbei mit einer Prägung versehen werden. Als Absorptionsmaterial kann beispielsweise ein Thermoplastisches Elastomer (TPE) oder ein Thermoplast eingesetzt werden usw.. Die Erfindung ist auf die genannten Materialien nicht beschränkt. Grundsätzlich kann jedes Material eingesetzt werden, das geeignet ist Energie einer Energiequelle zu absorbieren, beispielsweise Licht einer bestimmen Wellenlänge, welches von einer Lichtquelle als Energiequelle abgegeben wird, um nur ein Beispiel von vielen zu nennen.

Dazu wird nur der jeweils durch den Prägestempel 2 umzuformende Bereich 7 der Absorptionsschicht 3 des ansonsten für die Energie der Energiequelle transparenten oder durchlässigen Werkstücks 1 lokal mittels der Energiequelle 4 erwärmt, beispielsweise mittels eines Lasers 6. Die Laserstrahlen 5 treten dabei durch den hierfür transparenten oder durchlässigen Teil 8 des Werkstücks 1 hindurch und werden in der Absorptionsschicht 3 absorbiert und erwärmen die Absorptionsschicht 3 des Werkstücks 1 lokal jeweils in dem umzuformenden oder zu prägenden Bereich 7. Der jeweilige Bereich 9 der Absorptionsschicht 3, welcher durch den Prägestempel 2 nicht umgeformt wird, wird dagegen nicht durch die Energiequelle 4, wie beispielsweise den Laserstrahl, bearbeitete bzw. mit Energie bestrahlt und dem entsprechend erwärmt.

Der Laser 6 als ein Beispiel einer Energiequelle 4 rastert, wie in Fig. 1 angedeutet ist, den jeweils zu erwärmenden und zu prägenden Bereich 7 der Absorptionsschicht 3 des Werkstücks 1 ab. Hierbei ist zumindest die umzuformende Absorptionsschicht 3 und wahlweise zusätzlich das ansonsten transparente Werkstück 1 aus einem thermisch verformbaren Material, wie z.B. einem Thermoplast, einem thermoplastischen Elastomer oder einem anderen geeigneten thermisch verformbaren Material. Die Absorptionsschicht 3 mit ihrem jeweils erwärmten Bereich 7 nimmt an dieser Stelle später beim Umformvorgang die Oberflächentopographie des Prägestempels 2 bzw. dessen Prägestruktur 10 an, wie in nachfolgender Fig. 2 gezeigt ist. Die Prägestruktur kann beispielsweise eine Vertiefung oder eine Rille oder einen Kanal in das Werkstück einprägen. Die eingeprägte Vertiefung oder der eingeprägte Kanal kann dabei eine Breite in einem Bereich von z.B. 10µm - 100µm und insbesondere von z.B. 50pm - 100 µm aufweisen. Grundsätzlich lassen sich auch Breiten von größer 100µm bis zu mehreren Millimetern und Zentimetern realisieren. Der Vorteil der Erfindung liegt jedoch darin, dass insbesondere sehr kleine Strukturen geprägt werden können in einem Bereich von wenigen µm oder im Nanometerbereich.

Der Prägestempel 2 kann hierbei optional mit wenigstens einer weiteren zweiten Prägestruktur 11 oder Prägeform zum Umformen bzw. Prägen wenigstens eines Weiteren Werkstücks ausgebildet sein, wie in dem Ausführungsbeispiel in Fig. 1 gezeigt ist. Hierdurch kann der Prägestempel 2 für verschiedene Werkstücke 1 eingesetzt werden und diese z.B. mit unterschiedlichen Prägungen 10, 11 versehen. Der Prägestempel 2 kann beispielsweise aus Silikon, Metall und/oder Silizium hergestellt sein, wobei er auch jedes andere Material aufweisen kann, welches zum Prägen eines Werkstücks 1 geeignet ist.

Nachdem die Absorptionsschicht 3 in dem jeweils zu prägenden Bereich 7 durch die Energiequelle 4 geeignet oder ausreichend erwärmt wurde, wird das Werkstück 1 mit seiner Absorptionsschicht 3 gegen den Prägestempel 2 und dessen zugeordnete Prägestruktur 10 gedrückt. Der Prägestempel 2 bildet dabei mit seiner Prägestruktur 10 eine entsprechende Prägung 12 in der Absorptionsschicht 3 aus, wie in Fig. 2 gezeigt ist.

Alternativ kann ebenso zuerst das Werkstück 1 gegen den Prägestempel 2 gedrückt werden bevor es mit der Energie der Energiequelle 4 beaufschlagt wird. Ebenso kann das Werkstück 1 auch gleichzeitig gegen den Prägestempel 2 gedrückt werden, während es mit der Energie der Energiequelle 4 beaufschlagt wird. Beispielsweise können das zu prägende Werkstück 1 und der Prägestempel 2 zueinander geeignet positioniert werden, um das Werkstück 1 mittels des Prägestempels 2 zu prägen. Dann wird das Werkstück 1 mit seinem zu prägenden Bereich gegen den Prägestempel 2 gedrückt und/oder umgekehrt und anschließend oder alternativ gleichzeitig die Energie durch die Energiequelle 4 in den zu prägenden Bereich des Werkstücks 1 eingebracht. Währenddessen wird das Werkstück 1 weiterhin fest gegen den Prägestempel 2 gedrückt und dabei durch den Prägestempel 2 geprägt, da der zu prägende Bereich des Werkstücks 1 mittels der absorbierten Energie der Energiequelle 4 beispielsweise geeignet oder ausreichend erwärmt werden kann. Im Anschluss an das Prägen wird das geprägte Werkstück 1 abgekühlt und nach dem Abkühlen werden das Werkstück 1 und der Prägestempel 2 getrennt. Das Abkühlen des zu prägenden bzw. geprägten Bereichs kann auch bei der geringen lokal eingebrachten Energie ohne aktive äußere Maßnahme binnen Sekundenbruchteilen erfolgen.

In Fig. 2 ist eine schematische Ansicht des Werkstücks 1 gemäß Fig.1 gezeigt, wobei in der Absorptionsschicht 3 des Werkstücks 1 eine Prägung 12 durch den Prägestempel 2 ausgebildet ist. Wie zuvor mit Bezug auf Fig. 1 beschrieben wird der Prägestempel 2 gegen die Absorptionsschicht 3 des Werkstücks 1 gedrückt, z.B. mit einem vorbestimmten oder definierten Anpressdruck, und/oder das Werkstück 1 mit seiner Absorptionsschicht 3 wird gegen den Prägestempel 2 gedrückt, z.B. mit einem vorbestimmten oder definierten Anpressdruck.

Alternativ kann eine Absorptionsschicht zum Absorbieren von Energie der Energiequelle 4 auch mit umzuformenden Material derart bedeckt sein, dass dieses umzuformende Material, welches die Energie der Energiequelle 4 beispielsweise selbst nicht absorbiert, da es hierfür z.B. transparent ist, zum Umformen bzw. Prägen ausreichend durch die Absorptionsschicht erwärmt werden kann, um mittels des Prägestempels umgeformt bzw. geprägt zu werden. Die Absorptionsschicht ist dabei angrenzend zu dem zu prägenden Bereich angeordnet, beispielsweise oberhalb des zu prägenden Bereichs 7 in Fig. 1. In diesem Fall kann der darunter liegende zu prägende Bereich 7 in Fig. 1 auch aus einem für die Energie bzw. Strahlungsenergie transparenten Material bestehen, und wird zum Umformen ausreichend erwärmt durch die darüber liegende Schicht aus dem die Strahlungsenergie absorbierenden Material.

Grundsätzlich kann das umzuformende Material die Energie der Energiequelle 4 aber auch zumindest teilweise absorbieren.

Wie in dem Ausführungsbeispiel in Fig. 2 gezeigt ist, wird nur der durch die Energiequelle 4 zuvor erwärmte Bereich 7 durch den Prägestempel 2 umgeformt, wohingegen ein nicht durch die Energiequelle 4 zuvor erwärmter Bereich 9 nicht durch den Prägestempel 2 geprägt wird, auch wenn der Prägestempel 2 in diesem Bereich eine zusätzlich Prägestruktur 11 aufweist. Dadurch kann der Prägestempel 2 mit mehreren Prägestrukturen 10, 11 versehen und für unterschiedlich zu prägende Werkstücke genutzt werden. Hierdurch können Herstellungskosten gesenkt werden, da ein Prägestempel 1 für mehrere unterschiedlich zu prägende Werkstücke 10, 11 eingesetzt werden kann.
Des Weiteren kann beispielsweise ein größerer Bereich des Prägestempels 2 eine bestimmte Oberflächentopographie oder Rauigkeit aufweisen, die nur in den Bereichen 7 auf das Werkstück übertragen / geprägt wird, welche durch Energieeintrag ausreichend erwärmt werden und beispielsweise die Benetzbarkeit des Werkstücks verändert. So können mit einem Prägestempel 2 beliebig viele laterale Prägestrukturen erzeugt werden, zum Beispiel für Phase-guides.

In Fig. 3 ist das fertig geprägte Werkstück 1 nach dem Entfernen des Prägestempels gezeigt. Wie in Fig. 3 dargestellt ist, weist die Absorptionsschicht 3 des Werkstücks 1 in dem zuvor mittels der Energiequelle erwärmten Bereich 7 eine Prägestruktur 12 auf. Diese wurde erreicht durch Drücken der Absorptionsschicht 3 in oder gegen eine korrespondierende Prägestruktur 10, z.B. eine Vertiefung, des Prägestempels 2.

Statt wie in dem in den Fig. 1 bis 3 gezeigten Ausführungsbeispiel das ansonsten transparente Werkstück 1 mit einer zu prägenden Absorptionsschicht 3 zu versehen, welche mittels einer Energiequelle 4 in einem vorbestimmten Bereich oder Bereichen erwärmbar ist, kann alternativ die Absorption der Energie der Energiequelle 4 auch im Prägestempel 2 stattfinden. Durch das Zusammenpressen oder Zusammendrücken des Prägestempels und des Werkstücks kann der Prägestempel, durch seine Absorptionsschicht zumindest im Bereich seiner Prägestruktur, ein umzuformendes Material des Werkstücks umformen bzw. prägen. Das Werkstück weist dabei das umzuformende oder zu prägende Material auf der dem Prägestempel gegenüberliegenden Seite auf. Dabei kann in einer alternativen Ausführungsform das Werkstück zusätzlich mit einer Absorptionsschicht versehen sein, welche ebenfalls Energie einer Energiequelle absorbieren kann zum zusätzlichen Erwärmen des umzuformenden Materials des Werkstücks. Die Energiequelle kann dabei als zusätzliche Energiequelle vorgesehen werden, welche dazu vorgesehen ist durch die Absorptionsschicht des Werkstücks absorbiert zu werden. Das umzuformende Material des Werkstücks absorbiert hierbei keine Energie der Energiequelle oder zumindest nur einen Teil der Energie der Energiequelle.

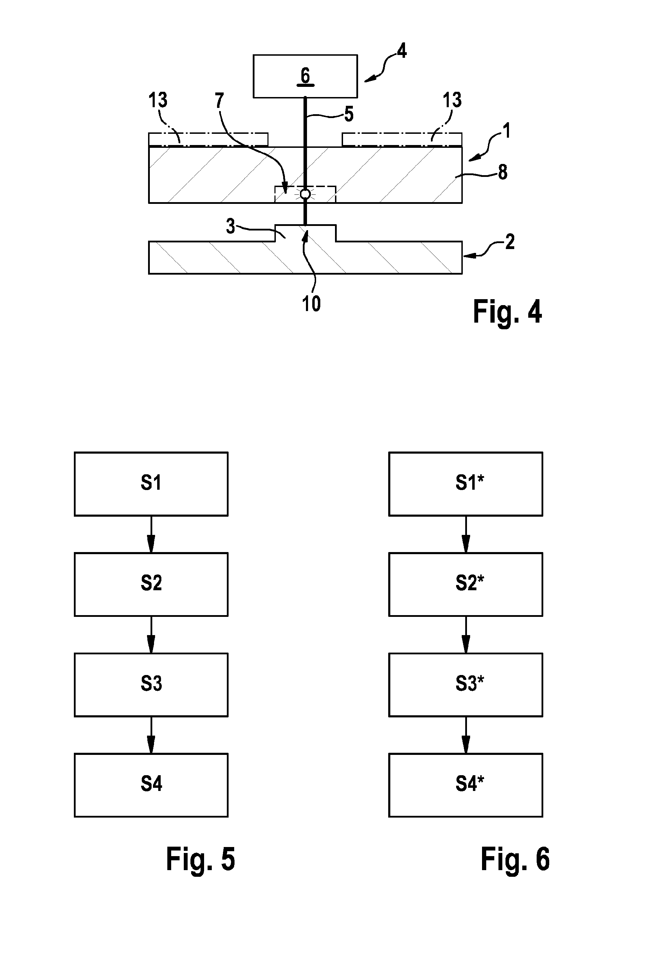

Wie in dem weiteren Ausführungsbeispiel der Erfindung in Fig. 4 gezeigt ist, ist das Werkstück 1 vollständig oder zumindest in dem jeweils zu prägenden Bereich 7, welcher mit einer gestrichelten Linie angedeutet ist, durchgehend transparent für die Energie der Energiequelle 4, beispielsweise eines Laserstrahls eines Lasers, eines Elektronenstrahls einer Elektronenstrahlquelle oder eines Lichtstrahls einer Lichtquelle usw.. Das Werkstück muss somit selbst keine Absorptionseigenschaften besitzen und kann vollständig transparent oder durchlässig für die Energie der Energiequelle 4 sein.

Der Laserstrahl 6 tritt dabei durch das für den Laserstrahl transparente Werkstück 1 oder zumindest einen transparenten durchgehenden Teil des Werkstücks 1, welcher den Bereich 7, der zu prägen ist, aufweist, hindurch und wird von dem Prägestempel 2 absorbiert.

Der Prägestempel 2 weist eine Prägestruktur 10 auf, mit welcher das Werkstück 1 zu prägen ist. Hierbei ist der Prägestempel 2 vollständig oder zumindest im Bereich seiner Prägestruktur 10 aus einem die Energie der Energiequelle 4 absorbierenden Material, vergleichbar der Absorptionsschicht in dem Ausführungsbeispiel in den Fig. 1-3.

Die Prägestruktur 10 kann dadurch durch die Energiequelle 4 erwärmt und vorab bzw. zuerst, gleichzeitig und/oder anschließend gegen den zu prägenden Bereich 7 des Werkstücks 1 gedrückt werden. Dies gilt für alle Ausführungsformen der Erfindung. Die für das Prägen ausreichend erwärmte Prägestruktur 10 erwärmt dabei den zu prägenden Bereich 7 des Werkstücks 1, wodurch dieser sich durch den Prägestempel 2 entsprechend der zugeordneten Prägestruktur 10 umformen lässt.

In einem weiteren Ausführungsbeispiel, wie in Fig. 4 mit einer strichpunktierten Linie angedeutet ist, kann das Werkstück 1 auch mit einer Maskierungseinrichtung 13 versehen werden, welche die Bereiche des darunter liegenden Prägestempels 2 abdeckt, welche nicht mittels der Energiequelle 4 erwärmt und anschließend in dem Werkstück 1 eingeprägt werden sollen. Eine solche Maskierungseinrichtung 13 kann auch bei den anderen Ausführungsformen der Erfindung eingesetzt werden, insbesondere auch bei den Ausführungsbeispielen wie sie in den Fig. 1 bis 3 gezeigt sind, in welchen eine Absorptionsschicht vorgesehen ist, welche Energie der Energiequelle absorbiert.

Alternativ zur Erhitzung oder Erwärmung durch eine Energiequelle 4, wie einen Laser, kann auch beispielsweise eine lokale Flutbelichtung als Energiequelle mit der entsprechenden Maskierungseinrichtung 13 eingesetzt werden oder eine andere optische Quelle als eine Flutbelichtung oder eine Kombination von optischen Quellen.

In Fig. 5 ist ein Flussdiagramm eines Ausführungsbeispiels des Prägeverfahrens gemäß der Erfindung gezeigt.

Das Prägeverfahren beginnt mit Schritt S1 dem Bereitstellen eines zu prägenden Werkstücks, eines Prägestempels mit wenigstens einer Prägestruktur für das zu prägende Werkstück und einer Energiequelle.

Das Werkstück weist hierbei, wie zuvor mit Bezug auf das Ausführungsbeispiel in den Fig. 1 bis 3 beschrieben, wenigstens einen Bereich mit einer Schicht aus einem die Energie der Energiequelle absorbierenden Material auf. Der Bereich kann dabei identisch mit dem umzuformenden Bereich sein oder diesen umfassen. Der Bereich muss jedoch nicht identisch mit dem umzuformenden Bereich sein.

Die Energiequelle ist hierbei insbesondere eine Strahlungsquelle, wie beispielsweise ein Laser, eine Elektronenstrahlquelle oder ein Licht- bzw. Flutlichtquelle.

In einem nächsten Schritt S2 werden der Prägestempel und das Werkstück mit dem zu prägenden Bereich zueinander justiert oder positioniert. Dann wird der Prägestempel mit dem zu prägenden Bereich des Werkstücks in Verbindung gebracht. Dabei kann der Prägestempel z.B. in den zu prägenden Bereich des Werkstücks zusätzlich gedrückt und/oder das Werkstück mit seinem zu prägenden Bereich gegen den Prägestempel gedrückt werden. Hierfür kann beispielsweise auch Vakuum verwendet werden.

In einem Schritt S3 bestrahlt die Energiequelle die die Energie der Energiequelle absorbierende Schicht des Werkstücks und zwar in dem zu prägenden Bereich. Dazu kann die Energie der Energiequelle, wie beispielsweise ein Laserstrahl, nur den zu prägenden Bereich der Absorptionsschicht bestrahlen oder die nicht zu bestrahlenden Bereiche des Werkstücks mit einer Maskierungseinrichtung maskiert werden. Durch die Absorption der Energie der Energiequelle durch das absorbierende Material des Werkstücks wird das Material in diesem Bereich erwärmt und kann dadurch mittels des Prägestempels anschließend umgeformt und geprägt werden.

Der Prägestempel wird dabei mit dem zu prägenden Bereich des Werkstücks unter einem geeigneten Anpressdruck in Verbindung gebracht. Dabei kann der Prägestempel in den zu prägenden Bereich des Werkstücks gedrückt und/oder das Werkstück mit seinem zu prägenden Bereich gegen den Prägestempel gedrückt werden. Der Anpressdruck ist derart gewählt, dass er ausreichend ist, um die Prägestruktur des Prägestempels auf den mittels der Energiequelle erwärmten zu prägenden Bereich des Werkstücks zu übertragen und einzuformen oder einzuprägen. Das Zusammendrücken von Prägestempel und Werkstück zum Umformen oder Prägen des Werkstücks kann hierbei vor, während und/oder anschließend an das Aufbringen der Energie der Energiequelle (4) erfolgen.

Nach dem Prägen des Werkstücks durch den Prägestempel wird dieser von dem fertig geprägten Werkstück in einem Schritt S4 entfernt. Das Werkstück kann hierbei beispielsweise dann entfernt, wenn es ausreichend abgekühlt ist.

In Fig. 6 ist ein Flussdiagramm eines weiteren Ausführungsbeispiels des Prägeverfahrens gemäß der Erfindung gezeigt.

Das Prägeverfahren beginnt mit dem Schritt S1* dem Bereitstellen eines zu prägenden Werkstücks, eines Prägestempels mit wenigstens einer Prägestruktur für das zu prägende Werkstück und einer Energiequelle.

Das Werkstück ist dabei, wie zuvor mit Bezug auf das Ausführungsbeispiel in Fig. 4 beschrieben, wenigstens in einem zu prägenden Bereich durchgehend transparent oder durchgehend durchlässig für die Energie der Energiequelle. Der Prägestempel ist dagegen zumindest im Bereich seiner Prägestruktur aus einem die Energie der Energiequelle absorbierenden Material.

In einem nächsten Schritt S2* werden der Prägestempel und das Werkstück mit dem zu prägenden Bereich zueinander justiert oder positioniert. Dann wird der Prägestempel mit dem zu prägenden Bereich des Werkstücks in Verbindung oder Kontakt gebracht. Dabei kann der Prägestempel zusätzlich z.B. in den zu prägenden Bereich des Werkstücks gedrückt und/oder das Werkstück mit seinem zu prägenden Bereich gegen den Prägestempel gedrückt werden.

Die Energie der Energiequelle, wie beispielsweise ein Laserstrahl, ein Elektronenstrahl oder ein Lichtstrahl, tritt in einem Schritt S3* durch den transparenten Bereich des Werkstücks hindurch und wird von dem absorbierenden Material der Prägestruktur des Prägestempels absorbiert, um die Prägestruktur geeignet zu erwärmen, so dass der zu prägende Bereich des Werkstücks durch den Prägestempel mit der Prägestruktur versehen werden kann. In dem Schritt S3* wird der Prägestempel durch das Werkstück hindurch mit Energie beaufschlagt und beispielsweise mittels einer Strahlungsquelle als Energiequelle bestrahlt. Die Prägestruktur wird durch die Energiequelle geeignet erwärmt, so dass diese in dem Schritt S3* das Werkstück in dessen zu prägendem Bereich mit der Prägestruktur versehen kann.

Dem entsprechend wird der Prägestempel mit dem zu prägenden Bereich des Werkstücks unter einem geeigneten Anpressdruck in Verbindung gebracht. Dabei kann der Prägestempel in den zu prägenden Bereich des Werkstücks gedrückt und/oder das Werkstück mit seinem zu prägenden Bereich gegen den Prägestempel gedrückt werden. Der Anpressdruck ist derart gewählt, dass er ausreichend ist, um die mittels der Energiequelle erwärmte Prägestruktur des Prägestempels auf den zu prägenden Bereich des Werkstücks zu übertragen und einzuformen oder einzuprägen. Das Zusammendrücken von Prägestempel und Werkstück zum Umformen oder Prägen des Werkstücks kann hierbei vor, während und/oder anschließend an das Aufbringen der Energie der Energiequelle (4) erfolgen.

Nach dem Prägen des Werkstücks durch den Prägestempel wird dieser von dem fertig geprägten Werkstück in einem Schritt S4* entfernt.

Beispielsweise kann als ein Werkstück, wie in den Ausführungsbeispielen in den Fig. 1-6 der Erfindung beschrieben, ein Chip mit einer Oberflächenstruktur geprägt werden. Derartig strukturierte Chips oder andere geprägte Werkstücke können im Bereich der Mikrofluidik, insbesondere für LifeScience-Anwendungen, eingesetzt werden. Mittels solcher Chips mit einer eingeprägten Oberflächenstruktur, z.B. Kanäle usw., kann eine lokale Adaption der Benetzungseigenschaften des Chips erzielt werden und/oder funktionale Baugruppen, Mikrodrosseln (z.B. eine pneumatische Mikrodrossel) usw. integriert werden.

Das Verfahren gemäß Ausführungsformen der Erfindung, wie zuvor anhand der Ausführungsbeispiele in den Fig. 1-6 beschrieben, erlaubt eine bisher nicht gekannte begrenzte lokale Umformung des Werkstücks ohne ausgedehnte thermische und daraus resultierende mechanische Belastungen. Des Weiteren ist eine variable Umformung möglich, da der Prägestempel mit verschiedenen Prägemustern versehen werden kann, die für verschieden Werkstücke eingesetzt werden können. Es kann des Weiteren eine variable Umformung realisiert werden, indem bei demselben Prägestempel die laterale Verteilung der eingebrachten Energie variiert wird.

Gemäß Ausführungsformen der Erfindung können lokal eng begrenzte von wenigen µm bis einige mm und variable Bereiche, also nicht ausschließlich durch den Prägestempel vorgegebene Bereiche, eines Werkstücks schnell mit mikroskopischer Auflösung geprägt werden, ohne umgebende Bereiche thermisch zu belasten. Dadurch können beispielsweise für mikrofluidische Anwendungen auf Lab-on-a-Chip-Systemen Prägungen vorgenommen werden, z.B. für die Einstellung von Benetzungseigenschaften, ohne benachbarte bio-funktionalisierte Bereiche durch übermäßige Erwärmung zu schädigen. Des Weiteren ermöglicht die Erfindung das Anfertigen verschiedener Baureihen/Designs ohne getrennte Prägestempel herstellen und verwenden zu müssen.

Ein weiterer Vorteil von Ausführungsformen der Erfindung ist, dass diese erlauben, ein Werkstück durch die Anwendung des lokalen Laserprägens mit einem Laser als Energiequelle erstens lokal eng begrenzt (im Bereich von wenigen µm bis einige mm), schnell (wenige ms bis min) und mit mikroskopischer Auflösung umzuformen, ohne angrenzende Bereiche thermisch zu belasten und zweitens dies mit nur einem Prägestempel für verschiedene Designs zu ermöglichen. Die Prägestrukturen selbst sind hierbei abhängig vom Prägestempel bis in den Nanometerbereich hinunter realisierbar.

Somit liegen Prägeverfahren vor, die auch auf Werkstücken mit thermisch empfindlichen Bereichen angewendet werden können, z.B. auf Lab-on-a-Chip-Systemen, wie zuvor beschrieben, die in einem früheren Fertigungsschritt bereits bio-funktionalisiert wurden oder generell temperaturempfindliche Substanzen vorlagern oder bezüglich thermischem Stress empfindlich sind.

Kostensparend kommt hinzu, dass mit nur einem Prägestempel verschiedene Designs realisiert werden können, da die Umformbereiche erst beim Laserprägen festgelegt werden. Es müssen also weniger Prägestempel hergestellt werden und seltener das Werkzeug mit diesen bestückt werden, da sie universeller verwendbar sind.

Als Prägestempel können des Weiteren Gegenstände oder Objekte verwendet werden mit einer strukturierten Oberfläche, wobei die Gegenstände oder Objekte mit ihrer strukturierten Oberfläche eine für ein Prägen ausreichende Festigkeit aufweisen oder mit einer hierfür ausreichenden Festigkeit versehbar sind, um ihre strukturierte Oberfläche auf das Werkstück zu übertagen durch Einformen oder Einprägen dieser Struktur in die Oberfläche des Werkstücks. Dazu kann das Werkstück, wie zuvor beschrieben, eine Absorptionsschicht aufweisen, die in dem jeweils zu prägenden Bereich mit Energie der Energiequelle beaufschlagt wird. Des Weiteren kann, wie zuvor beschrieben, die Absorptionsschicht dazu verwendet werden, eine für die Energie der Energiequelle durchlässige umformbare Schicht z.B. geeignet zu erwärmen, so dass das Objekt mit der strukturierten Oberfläche in die umformbare Schicht eingeprägt oder übertragen werden kann.

Dabei kann das Werkstück, wie beispielsweise ein Chip, mit wenigstens einem benetzbaren Bereich ausgebildet werden oder mit mehreren, gleich benetzbaren oder unterschiedlich benetzbaren Bereichen ausgebildet werden. Beispielweise kann in die Oberfläche des Werkstücks eine Struktur mit wenigstens einer Führung oder einem sog. Phaseguide zum Führen eines Medium, wie z.B. einer Flüssigkeit wie Wasser usw., eingeprägt werden. Diese Struktur kann beispielsweise für Lab-on-a-Chip-Anwendungen in einem Bereich des Chips eingeformt werden, der als Boden von fluidischen Kanälen oder Kammern dienen soll.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Insbesondere können die zuvor anhand der Figuren 1-6 beschriebenen Ausführungsbeispiele auch miteinander kombiniert werden, insbesondere einzelne Merkmale.

## Patentansprüche

1. Prägeverfahren zum Prägen eines Werkstücks (1), insbesondere eines mikrofluidischen Chips, mit den Schritten:
Bereitstellen eines Werkstücks (1), wobei zumindest ein zu prägender Bereich (7) des Werkstücks (1), ein zu dem zu prägenden Bereich (7) angrenzender Bereich und/oder eine erste Prägestruktur (10) eines Prägestempels (2) ein energieabsorbierendes Material aufweist,
und wobei das Werkstück (1) und/oder der Prägestempel zumindest einen Bereich (8) aufweist, welcher aus einem für die Energie durchlässigen Material besteht;
Aufbringen von Energie auf den zu prägenden Bereich (7) des Werkstücks (1) aus dem absorbierenden Material, auf den an den zu prägenden Bereich (7) angrenzenden Bereich aus dem energieabsorbierenden Material und/oder auf die erste Prägestruktur (10) des Prägestempels (2) aus dem energieabsorbierenden Material;
Zusammenpressen des Werkstücks mit seinem zu prägenden Bereich und des Prägestempels mit seiner Prägestruktur, und
Einprägen der ersten Prägestruktur (10) in den zu prägenden Bereich (7) des Werkstücks.

2. Prägeverfahren nach Anspruch 1, wobei das Werkstück mit seinem zu prägenden Bereich (7) und der Prägestempel (2) mit seiner Prägestruktur (10) vor, während und/oder anschließend an das Aufbringen der Energie zusammengepresst werden und die erste Prägestruktur (10) in den zu prägenden Bereich (7) des Werkstücks eingeprägt wird.

3. Prägeverfahren nach Anspruch 1 oder 2, wobei der Prägestempel (2) wenigstens eine zweite Prägestruktur (11) aufweist und wobei die Energie auf einen ersten und/oder zweiten zu prägenden Bereich (7, 9) des Werkstücks (1) aus dem energieabsorbierenden Material aufgebracht und von diesem absorbiert wird.

4. Prägeverfahren nach einem der vorhergehenden Ansprüche, wobei der Prägestempel (2) wenigstens eine zweite Prägestruktur (11) aufweist und die Energie auf die erste Prägestruktur (10) und/oder die zweite Prägestruktur (11) des Prägestempels (2) aus dem energieabsorbierenden Material aufgebracht und von diesem absorbiert wird.

5. Prägeverfahren nach einem der vorhergehenden Ansprüche, wobei die Energie insbesondere eine Strahlungsenergie eines Lasers, einer Elektronstrahlquelle oder einer Lichtquelle ist.

6. Prägeverfahren nach einem der vorhergehenden Ansprüche, wobei das Werkstück (1) mit einer Maskierungseinrichtung (13) zum Bestrahlen des Werkstücks mit einer Strahlungsenergie versehen wird.

7. Prägeverfahren nach einem der vorhergehenden Ansprüche, wobei das die Energie absorbierende Material (3) und das für die Energie durchlässige Material (9) ein thermisch verformbares Material ist, insbesondere ein Thermoplast oder ein thermoplastisches Elastomer.

8. Prägeverfahren nach einem der vorhergehenden Ansprüche, wobei der Prägestempel (2) zumindest teilweise aus Silikon, Metall, Glas, einer Siliziumverbindung und/oder Silizium besteht.

9. Werkstück (1) welches mit dem Prägeverfahren nach einem der vorhergehenden Ansprüche mit einer Prägung versehen ist.

10. Werkstück nach Anspruch 9, **dadurch gekennzeichnet, dass** das Werkstück ein Chip ist und als Prägung eine Mikroprägung aufweist und wobei der Chip insbesondere ein Lab-on-a-Chip ist.

11. Werkstück nach Anspruch 9 oder 10, **dadurch gekennzeichnet, dass** die Prägung eine Vertiefung oder ein Kanal ist und eine Breite aufweist in einem Bereich zwischen 10µm und 100µm und der Kanal eine Tiefe in einem Bereich von 1µm bis 100µm und/oder eine Länge in einem Bereich von 1 mm bis 100mm aufweist.

12. Werkstück nach einem der Ansprüche 10 bis 11, **dadurch gekennzeichnet, dass** der Kanal derart mäanderförmig ausgebildet ist, dass er eine pneumatische Drossel bildet.

13. Werkstück nach einem der Ansprüche 10 bis 12, **dadurch gekennzeichnet, dass** die Prägung eine definierte Topographie oder Rauigkeit derart aufweist, dass durch die Prägung eine lokale Veränderung der Benetzbarkeit des Chips dargestellt ist.
